# EUROPÄISCHE PATENTSCHRIFT

(11) **EP 4 151 571 B1**
(45) Veröffentlichungstag und Bekanntmachung des Hinweises auf die Patenterteilung: **20.11.2024**
(21) Anmeldenummer: 22205574.1
(22) Anmeldetag: 08.12.2016
(51) Int. Cl.: B65G 54/02

(54) **LINEARES TRANSPORTSYSTEM MIT MINIMALER TRANSPORTTEILUNG**
LINEAR TRANSPORT SYSTEM WITH MINIMUM TRANSPORT SPACING
SYSTÈME DE TRANSPORT LINÉAIRE AVEC UN MINIMUM DE PARTAGE DE TRANSPORT

(30) Priorität: 21.12.2015 DE 102015226141
(43) Veröffentlichungstag der Anmeldung: 22.03.2023
(62) Teilanmeldung aus: 16809017.3
(73) Patentinhaber: Krones AG, 93073 Neutraubling (DE)
(72) Erfinder: Neubauer, Michael, 93073 Neutraubling (DE)
(74) Vertreter: Grünecker Patent- und Rechtsanwälte PartG mbB

(56) Entgegenhaltungen:
- EP-A1- 2 889 238
- EP-A2- 0 820 862
- WO-A1-2011/131386
- CN-B- 1 914 103
- DE-A1- 102010 027 925
- DE-C1- 19 510 281
- JP-A- H0 551 087
- JP-A- H1 017 125

## Beschreibung

### Gebiet der Erfindung

Die vorliegende Erfindung betrifft eine Vorrichtung zum gesteuerten Bewegen von einzeln steuerbaren Transportelementen zum Transport, also insbesondere auch zum Schieben, Abbremsen, Verteilen, Ausschleusen, usw. von Behältern oder von Behälterzubehör wie z.B. Verschlüssen oder Etiketten, insbesondere von Flaschen oder Dosen, in einer Anlage zur Behandlung der Behälter.

### Stand der Technik

Transportsysteme mit Linearmotorantrieb, sogenannte lineare Transportsysteme, sind im Stand der Technik wohlbekannt. Prominentestes Beispiel sind Personenschnellzüge auf der Basis von Magnetschwebetechnik. Transportsysteme mit Linearmotorantrieb werden jedoch auch in vielen Bereichen der Industrie, insbesondere zum individuellen Transport von Stückgut innerhalb von Produktionslinien eingesetzt.

In der DE 10 2013 218 389 A1 ist beispielsweise ein lineares Transportsystem mit einer Vielzahl von Magnetläufern zum Transport von Flaschen in einer Behälterbehandlungsanlage beschrieben. Die die Flaschen transportierenden Läufer bewegen sich dabei angetrieben durch die magnetische Wechselwirkung zwischen einem Permanent- und/oder Elektromagnete tragenden Sekundärteil der Läufer und zwei Langstatoren entlang zweier parallel geführter Führungsschienen, die mit dem jeweiligen Langstator verbunden sind. Dabei sind die Läufer über Rollen an den Führungsschienen gelagert und haben in der Ebene der Rollenlager im Allgemeinen ein Fahrgestell mit einer rechteckigen Form, wobei in Längsrichtung der Läufer nur geringfügig voneinander beabstandete Rollenpaare an der jeweiligen Führungsschiene angreifen.

Für die Gestaltung der Läufer ergeben sich in der Praxis widersprüchliche Anforderungen. Einerseits sollen die Läufer in Längsrichtung, d. h. in Bewegungsrichtung, eine möglichst geringe Ausdehnung haben, damit der Abstand der von ihnen transportierten Behälter oder Objekte in dem sich ergebenden Behälterstrom, die sogenannte Transportteilung, möglichst klein und somit der Durchsatz von Behältern pro Zeiteinheit einer das Transportsystem einsetzenden Behälterbehandlungsanlage möglichst groß sein kann. Falls jeder Läufer genau einen Behälter transportiert, ergibt sich beispielsweise die minimal erreichbare Teilung, wenn aufeinanderfolgende Läufer auf Stoß fahren. Diese minimal erreichbare Teilung entspricht somit der maximalen Längsausdehnung der Läufer, sofern die Behälter kleiner als die Läufer sind. Ebenso ist eine geringe Längsausdehnung der Läufer wünschenswert, um kleine Behälter im aufgestauten Zustand an einer Übergabestelle von einem Transportband aufnehmen zu können.

Umgekehrt ist es erstrebenswert, die Läufer möglichst lang auszubilden, um den Verschleiß und die Belastung der Lagerelemente, im Allgemeinen der Rollen, zu reduzieren. Zudem können die Rollen bei einem langen Läufer kleiner ausgebildet werden als bei einem kurzen Läufer. Alternativ kann der Läufer bei gleicher Dimensionierung der Lagerelemente mehr Last aufnehmen.

Bei den im Stand der Technik bekannten linearen Transportsystemen verlaufen die Führungsschienen für die Lagerelemente der Läufer und die Langstatoren der Linearmotoren parallel zueinander. Dies ist auch im Bereich von Kurven der Fall, was bei Läufern, bei denen die Rollen entlang der jeweiligen Führungsschiene nah beieinander liegen, im Allgemeinen kein Problem darstellt. Will man die Läufer jedoch aus den oben genannten Gründen in Längsrichtung mit einem vergrößerten Rollenabstand versehen, so ändern sich die geometrischen Verhältnisse des magnetischen Antriebs bei der Kurvenfahrt. Durch die unvermeidbaren Überschneidungen vergrößert oder verkleinert sich der Abstand zwischen dem Sekundärteil des Läufers und dem Langstator, je nachdem, ob es sich um eine Innen- oder Außenkurve handelt. Aus funktionellen Gründen ist es jedoch erstrebenswert, dass dieser Abstand, bzw. genauer die Breite des Luftspalts zwischen den Magneten des Sekundärteils und den Magneten, also den Spulen bzw. den Eisenkernen der Spulen, des Langstators, während der gesamten Fahrt konstant bleibt, da eine Änderung dieses Abstandes eine gravierende Änderung der Normal- und Vortriebskräfte auf den Läufer mit sich bringen würde.

DE 10 2010 027925 A1 offenbart Transportelemente gemäß dem Oberbegriff des Anspruchs 1.

Es liegt somit der vorliegenden Erfindung die Aufgabe zugrunde, ein lineares Transportsystem bereitzustellen, welches eine möglichst geringe Transportteilung gestattet, ohne negative Auswirkungen auf Verschleiß und Belastung der Lagerelemente zu haben. Zudem soll ein lineares Transportsystem zur Verfügung gestellt werden, welches möglichst konstante Normal- und Vortriebskräfte entlang der gesamten Transportbahn ermöglicht. Ganz allgemein liegt der vorliegenden Erfindung die Aufgabe zugrunde, den Durchsatz eines linearen Transportsystems bei gleichzeitig geringem Wartungsaufwand zu steigern.

### Beschreibung der Erfindung

Die oben genannten Aufgaben werden gelöst durch ein Transportsystem mit Transportelementen gemäß dem Gegenstand des Anspruchs 1.

Bei Behälterbehandlungsanlagen werden Behälter, wie z. B. Flaschen, Dosen, usw., in einem oder mehreren aufeinanderfolgenden Prozessschritten behandelt. Dabei werden im Allgemeinen die Prozessschritte bzw. Arbeitsschritte in separaten Behandlungseinheiten durchgeführt, die beispielsweise als Module eines gemeinsamen Anlagenkonzepts zusammengestellt werden können. Eine Behälterbehandlungsanlage für Kunststoffflaschen, z. B. aus Polyethylenterephthalat (PET), Polypropylen (PEP), usw., kann beispielsweise eine Heizvorrichtung zum Erwärmen der Vorformlinge, eine Streckblasvorrichtung zum Expandieren und Strecken der Vorformlinge zu Kunststoffflaschen, eine Reinigungsvorrichtung, eine Etikettiervorrichtung, eine Füllvorrichtung, eine Sortiervorrichtung, eine Verpackungsvorrichtung, eine Sterilisationsvorrichtung, eine Inspektionsvorrichtung, eine Temperiervorrichtung, eine Kühlvorrichtung, eine Beschichtungsvorrichtung, eine Puffervorrichtung, usw. als separate, modular ausgeführte Behandlungseinheiten umfassen. Die einzelnen Behandlungseinheiten, welche aufeinanderfolgende Prozessschritte durchführen, sind dabei im Allgemeinen in Reihe hintereinander geschaltet, wobei eine oder mehrere Transportvorrichtungen den Transport der Behälter von den Behandlungseinheiten zu den jeweiligen nachgeschalteten Behandlungseinheiten übernehmen. Auch ist es denkbar, dass mehrere der oben genannten Prozessschritte in einer Behandlungseinheit zusammengefasst werden. Insbesondere ist es möglich Behandlungseinheiten für das kombinierte Expandieren und Füllen oder das Füllen und Verschließen von Behältern vorzusehen.

Die vorliegende Erfindung betrifft ein solches Transportsystem zum Transport von Behältern in einer Behälterbehandlungsanlage. Zum Transport der Behälter entlang einer Prozessstrecke in einer Behälterbehandlungsanlage umfasst das Transportsystem erfindungsgemäß eine Vielzahl von Transportelementen zum Transportieren eines oder mehrerer Behälter, wobei die Transportelemente bewegbar an einer Transportbahn des Transportsystems angeordnet sind. Die Anzahl der Transportelemente an der Transportbahn ist dabei prinzipiell beliebig und lediglich durch die Länge der Transportbahn begrenzt. Zur Aufnahme mindestens eines Behälters an einer Aufnahmestelle und zur Abgabe der Behälter an einer Abgabestelle können die Transportelemente mit einer geeigneten Haltevorrichtung zum Halten eines oder mehrerer Behälter, z. B. in Form eines Greifelements, ausgestattet sein. Das Greifelement kann dabei passiv oder aktiv steuerbar ausgebildet sein. Insbesondere sind Greifelemente, z. B. Neckhandlingklammern, zum formschlüssigen oder kraftschlüssigen Greifen eines Halsbereichs ("Neck") der Behälter, beispielsweise zum Neckhandling von Kunststoffflaschen, vorstellbar, wobei der gehaltene Behälter beim formschlüssigen Greifen um seine Längsachse drehbar in dem Greifelement gelagert sein kann. Zudem kann das Greifelement schwenkbar und/oder höhenverstellbar ausgebildet sein. Auch ist es denkbar, mit der vorliegenden Erfindung Behälter zu behandeln, die auf einem Transportband transportiert werden. Unter Behandeln wird hierbei insbesondere ein Abbremsen und / oder Beschleunigen von Behältern relativ zum Transportband verstanden. Dies erlaubt eine Vergrößerung oder Verkleinerung der Abstände der Behälter zueinander während des Transportes. Behälter sind insbesondere Getränkeflaschen, aber auch andere Behälter für Lebensmittel, Medikamente, Hygieneartikel, Reinigungsmittel oder dergleichen, wie z. B. Dosen, Glasflaschen oder andere Glasbehälter mit Deckel, Verpackungen auf der Basis von Karton oder Verbundstoffen wie beispielsweise Tetrapack oder Ähnliches. Ebenso sind bei Behältern aus Kunststoff auch Zwischenprodukte, insbesondere Vorformlinge zum Streckblasen der Behälter vorstellbar. Des Weiteren sind unter Behältern auch zusammengestellte Gebinde mit mehreren Behältern zu verstehen.

Die Transportelemente können als Läufer, Puck, Schlitten, Shuttle oder dergleichen ausgebildet sein, welche erfindungsgemäß durch magnetische Wechselwirkung mit wenigstens einem Langstator eines Linearmotors, d. h. einem Linearmotorstrang, der Transportbahn entlang der Transportbahn bewegt werden können. Jedes Transportelement kann dabei je nach Bedarf an der Transportbahn beschleunigt, abgebremst, mit konstanter Geschwindigkeit bewegt oder auch zeitweise ganz angehalten werden. Durch individuelles Steuern der Transportelemente lässt sich somit ein variables Weg-Zeit-Profil jedes einzelnen Transportelements realisieren.

Die Transportbahn des Transportsystems weist wenigstens einen, vorzugsweise sogar zwei, Langstatoren eines Linearmotors auf. Die Form der Transportbahn ist dabei grundsätzlich beliebig. Insbesondere kann die Transportbahn im Wesentlichen geschlossen sein, wobei im Wesentlichen geschlossen bedeutet, dass die Transportbahn mindestens einen geschlossenen Weg für die Transportelemente ermöglicht. Darüber hinaus kann die Transportbahn durch Einfügen einer oder mehrerer Weichen beliebig viele Verzweigungen aufweisen.

Die Transportbahn kann weiterhin wenigstens eine Führungsschiene aufweisen, an welcher die Transportelemente mittels eines oder mehrerer Lagerelemente bewegbar gelagert sind. Insbesondere kann die Transportbahn zwei parallel geführte Führungsschienen in Form eines Doppelschienensystems, wie z. B. bei Eisenbahngleisen, aufweisen. Der oder die Langstatoren können dabei parallel zu den jeweiligen Führungsschienen oder, beispielsweise mittig, zwischen diesen angeordnet sein. Eine Vielzahl von Ausführungen der Führungsschienen und Langstatoren ist im Stand der Technik bekannt.

Die Form und der Querschnitt der Führungsschienen sind dabei beliebig und lediglich durch die Ausführung der Transportelemente sowie der Lagerelemente der Transportelemente, mit welchen die Transportelemente bewegbar an den Führungsschienen gelagert sind, bestimmt. Z. B. kann jede Führungsschiene einen Führungskanal, in welchem ein Führungsstift der Transportelemente geführt wird, und/oder einen Spurkranz aufweisen, auf welchem eine oder mehrere geeignet angeordnete Führungsrollen der Transportelemente abrollen. Eine Vielzahl alternativer Ausführungsformen, z. B. mittels eines Gleitlagers, ist hier vorstellbar. Durch das Bereitstellen von Führungsschienen an der Transportbahn kann eine reibungsarme Bewegung der Transportelemente entlang der Transportbahn ermöglicht werden. Darüber hinaus kann die Transportbahn über eine Lauffläche verfügen, auf welcher entsprechende Stützelemente, z. B. Stützrollen, abrollen bzw. gleiten können.

Der wenigstens eine Langstator kann insbesondere als synchroner Linearmotor ausgebildet sein. In einer alternativen Ausführung kann der Langstator auch als asynchroner Linearmotor ausgebildet sein, wobei mindestens ein Permanentmagnet und/oder nicht schaltender Elektromagnet eines Sekundärteils der Transportelemente und/oder ein elektrisch leitendes Element der Transportelemente, z. B. in Form einer metallischen Platte, an welcher der Permanentmagnet und/oder nicht schaltende Elektromagnet angebracht sind, als elektrische Leiter für die Induktion durch die asynchronen Linearmotoren fungieren. Für die magnetische Wechselwirkung mit dem wenigstens einen Langstator können die Transportelemente wie erwähnt jeweils über ein Sekundärteil verfügen, welches mit wenigstens einem Permanentmagneten und/oder wenigstens einem Elektromagneten ausgestattet ist, wobei das Sekundärteil derart ausgebildet ist, dass das jeweilige Transportelement durch magnetische Wechselwirkung mit dem wenigstens einen Langstator der Transportbahn entlang der Transportbahn bewegt werden kann.

Der wenigstens eine Langstator des Linearmotors kann in einer besonders einfachen Ausführung durch eine Vielzahl entlang des Linearmotorstranges angeordneter elektrischer Wicklungen in Form von einzeln oder blockweise ansteuerbaren Elektromagneten gebildet werden. Hierbei sind auch komplexere Ausführungen, z. B. mittels einer Halbachanordnung der Elektromagnete zur Verstärkung des magnetischen Flusses auf der dem Sekundärteil zugewandten Seite, denkbar. Das Transportelement kann als passives Transportelement ausgebildet sein, welches über ein Sekundärteil mit mindestens einem Permanentmagneten und/oder nicht schaltenden Elektromagneten durch Wechselwirkung mit den von den einzeln ansteuerbaren Elektromagneten des Linearmotors erzeugten elektromagnetischen Wechselfeldern bewegt wird. Ein nicht schaltender Elektromagnet ist dabei derart mit einer Stromversorgung und/oder einer Regeleinheit des Transportsystems verbunden, dass er stets in derselben Richtung von einem, vorzugsweise regelbaren, elektrischen Strom durchflossen wird. Alternativ kann das Transportelement als aktives Transportelement mit elektrischen Wicklungen versehen sein, welche die für den Antrieb notwendigen magnetischen Wechselfelder aufbringen können. Entsprechend wird der wenigstens eine Langstator der Transportbahn in dieser Weiterbildung mit Permanentmagneten bzw. nicht schaltenden Elektromagneten versehen.

In einer Ausführung können der mindestens eine Permanentmagnet und/oder nicht schaltende Elektromagnet quer zur Transportbahn gerichtet an dem Sekundärteil des Transportelements angeordnet sein, sodass einer der magnetischen Pole des Permanentmagneten und/oder nicht schaltenden Elektromagneten mit einem ersten Langstator wechselwirken kann, während der andere magnetische Pol mit einem zweiten Langstator wechselwirken kann. Alternativ können die dem ersten Langstator und dem zweiten Langstator zugewandten Seiten des Sekundärteils jedoch auch separate Permanentmagnete und/oder nicht schaltende Elektromagnete aufweisen, welche insbesondere in Halbachanordnung zur Verstärkung des magnetischen Flusses in Richtung des jeweiligen Linearmotorstranges ausgebildet sein können. Des Weiteren ist auch eine Ausführung mit lediglich einem Langstator denkbar, wobei die Magnete des Sekundärteils insbesondere in Halbachanordnung angeordnet sein können. Eine Versorgung des mindestens einen nicht schaltenden Elektromagneten des Sekundärteils des Transportelements mit der benötigten elektrischen Energie kann über eine entlang der Transportbahn angeordnete elektrische Leitung oder Leistungsversorgungsschiene und über elektrische Kontakte des Transportelements, z. B. über Leistungssammelschuhe, erreicht werden. Alternativ ist eine Übertragung der benötigten elektrischen Energie via Induktion denkbar.

Die Transportelemente können mittels einer Steuer- und/oder Regeleinheit, z. B. in Form eines Prozessrechners, entlang der Transportbahn geführt werden. Die Steuer- und/oder Regeleinheit kann dabei als eine zentrale Steuer- und/oder Regeleinheit des Transportsystems und/oder durch dezentral an den Transportelementen angeordnete Steuer- und/oder Regeleinheiten realisiert werden. Des Weiteren können die eine oder mehrere Steuer- und/oder Regeleinheiten als speicherprogrammierbare Steuereinheit(en) SPS ausgebildet sein. Durch gezieltes Ansteuern einzelner Elektromagnete bzw. einzelner Blöcke von Elektromagneten des wenigstens einen Langstators in einem begrenzten Bereich der Transportbahn wird ein bestimmtes Transportelement gezielt beschleunigt und somit bewegt, sodass das Transportelement einzeln und unabhängig von anderen Transportelementen der Vielzahl von Transportelementen des Transportsystems entlang der Transportbahn geleitet wird. Dabei erfolgt das Ansteuern der Elektromagnete des Langstators mittels der Steuer- und/oder Regeleinheit des Transportsystems. Insbesondere kann die Stromstärke durch die elektrischen Wicklungen der Elektromagnete des Langstators einzeln von der Steuer- und/oder Regeleinheit automatisch in Abhängigkeit von einem Kraftbedarf des zu bewegenden Transportelements geregelt werden. Durch individuelles Steuern und/oder Regeln der Stromstärke durch einzelne Wicklungen der Linearmotorstränge kann das Transportelement beschleunigt, abgebremst oder mit einer konstanten vorgegebenen Geschwindigkeit bewegt werden.

Die Transportelemente können, je nach Ausbildung der Führungsschiene, des Sekundärteils und/oder des wenigstens einen Langstators, vollständig mechanisch oder teilweise magnetisch und teilweise mechanisch an der Transportbahn gelagert sein. Bei teilweise magnetischer Lagerung ist die Transportbahn derart ausgebildet, dass die magnetische Wechselwirkung zwischen dem Sekundärteil des Transportelements und dem Langstator eine teilweise magnetische Levitation des Transportelements bewirkt und somit die mechanische Belastung der Lagerelemente reduziert. Zusätzlich verfügen die Transportelemente dabei über ein oder mehrere Stützelemente, z. B. in Form von Stützrollen und/oder Führungsrollen, welche auf der wenigstens einen Führungsschiene abrollen. Ebenso ist eine teilweise oder vollständig mechanische Lagerung mittels mindestens eines Gleitlagers denkbar. Besonders kostengünstig ist eine Ausführung der Lagerung der Transportelemente mittels Gleitlager, welche mit der Führungsschiene in Kontakt stehen. Zusätzliche Stützelemente bzw. Gleitlager können dabei auf einer zusätzlichen Lauffläche der Transportbahn rollen bzw. gleiten. Bei vollständig mechanischer Lagerung kann das Transportelement ausschließlich durch die beschriebenen Stützelemente bzw. Gleitlager gelagert sein.

Zum individuellen Steuern der Transportelemente entlang der Transportbahn können durch regelmäßige und periodische Anordnung von Sensoren entlang zumindest eines Abschnitts der Transportbahn die Positionen der Transportelemente auf diesem Abschnitt der Transportbahn bestimmt werden. Dabei können die Sensoren als optischer Sensor, elektrischer Sensor, elektromagnetischer Sensor oder mechanischer Sensor ausgebildet sein, wobei z. B. durch Messen einer Lichtreflektion an einem Reflektorelement der Transportelemente, durch Induktion eines elektromagnetischen Signals aufgrund der Bewegung der Transportelemente, durch Änderungen des elektrischen Widerstandes des Sensors unter Ausnutzung eines magnetoresistiven Effektes, z. B. aufgrund des magnetischen Flusses eines magnetischen Referenzelements, insbesondere eines Permanentmagneten, oder des Sekundärteils der Transportelemente, oder durch lokale Druckmessung aufgrund des Gewichts der Transportelemente die Position der Transportelemente im Bereich des Sensors bestimmt werden kann.

Erfindungsgemäß sind die Front- und Rückseiten der Transportelemente des Transportsystems derart geformt, dass die Transportelemente wenigstens paarweise soweit ineinander gefahren werden können, dass sich eine minimal erreichbare Transportteilung ergibt, die geringer als die Längsausdehnung der Transportelemente ist. Unter der Frontseite eines Transportelements ist hier und im Folgenden die in Bewegungsrichtung gerichtete Seite des Transportelements zu verstehen. Entsprechend ist unter der Rückseite die der Bewegungsrichtung abgewandte Seite des Transportelements zu verstehen. Obwohl die Transportelemente mittels der oben genannten Steuereinheit entlang der Transportbahn im Allgemeinen sowohl vorwärts als auch rückwärts bewegt werden können, ergibt sich aufgrund der Prozessabfolge der Behälterbehandlungsanlage und der Anordnung der Transportbahn in der Behälterbehandlungsanlage eine bevorzugte Transportrichtung, sodass Front- und Rückseiten der an der Transportbahn angeordneten Transportelemente wohl definiert sind. Je nach Ausführung können die Transportelemente jedoch auch um 180 Grad gedreht an der Transportbahn angeordnet werden. In diesem Fall vertauschen sich die Rollen von Front- und Rückseite, ohne jedoch die Gültigkeit der oben genannten Relation dieser beiden Seiten zu berühren.

Die minimal erreichbare Transportteilung ist durch den Abstand sich entsprechender Referenzpunkte aufeinanderfolgender Transportelemente, beispielsweise der Schwerpunkte beförderter Behälter bzw. der Transportelemente, definiert, der erreicht werden kann, indem die aufeinanderfolgenden Transportelemente möglichst nah zueinander, im Extremfall auf Stoß, geführt werden. Dieser ist gemäß der vorliegenden Erfindung aufgrund entsprechender Ausformung der Front- und Rückseiten der Transportelemente geringer als die Längsausdehnung der Transportelemente. Unter der Längsausdehnung der Transportelemente ist dabei hier und im Folgenden die maximale Ausdehnung der Transportelemente in Transportrichtung zu verstehen. Genauer gesagt sind die Front- und Rückseiten der Transportelemente derart geformt, dass die Transportelemente wenigstens paarweise ineinander gefahren werden können. Beispielsweise können die Front- und Rückseiten der Transportelemente derart geformt sein, dass die Frontseite eines nachlaufenden Transportelements und die Rückseite eines unmittelbar vorauslaufenden Transportelements ineinander gefahren werden können. Dies bedeutet, dass vorspringende Teile der Frontseite des nachlaufenden Transportelements in entsprechende Ausnehmungen der Rückseite des vorauslaufenden Transportelements und/oder vorspringende Teile der Rückseite des vorauslaufenden Transportelements in entsprechende Ausnehmungen der Frontseite des nachlaufenden Transportelements gefahren werden können. Die Front- und Rückseiten aufeinanderfolgender Transportelemente sind somit derart zusammenpassend geformt, dass sie gleich einer Verzahnung ineinander gefahren werden können. Beispielsweise kann die Kontur der Frontseite in einem der Transportebene entsprechenden Schnitt des nachlaufenden Transportelements in die Kontur der Rückseite in einen solchen Schnitt des vorauslaufenden Transportelements passen. Das Ineinander Fahren erfolgt dabei erfindungsgemäß ohne Verformung der Transportelemente, und kann insbesondere ohne mechanischen Kontakt der Transportelemente erfolgen.

Im einfachsten Fall sind alle Transportelemente derart gestaltet, dass dieses Verhältnis von Front- und Rückseite für die Front- und Rückseite jedes einzelnen Transportelements selbst gilt. Insbesondere sind die Transportelemente also nicht spiegelsymmetrisch bzgl. einer Ebene quer zur Transportrichtung ausgebildet. Ein komplexerer Fall ergibt sich, wenn sich das Verhältnis von Front- zu Rückseite lediglich auf die Frontseite eines nachlaufenden und die Rückseite eines vorauslaufenden Transportelements bezieht. In diesem Fall können jeweils Paare von Transportelementen soweit ineinander gefahren werden, dass die minimal erreichbare Transportteilung kleiner als deren Längsausdehnung ist. Ein Spezialfall dieser Ausbildung wird weiter unten beschrieben, in dem aufeinanderfolgende Transportelemente um 180 Grad zueinander gedreht angeordnet sind. Bei der zuerst genannten gleichartigen Ausbildung der Transportelemente können jedoch ganze Züge bzw. Ketten von Transportelementen mit minimaler Transportteilung gebildet werden.

Erfindungsgemäß weisen die Transportelemente jeweils in Längsrichtung voneinander beabstandete Rollen auf, mittels derer die Transportelemente bewegbar an der Transportbahn, insbesondere an der zuvor erwähnten wenigstens einen Führungsschiene, gelagert sind, wobei die minimal erreichbare Transportteilung geringer als der maximale Abstand dieser Lagerelemente in Längsrichtung ist. Hierzu können die Lagerelemente insbesondere an geeigneten, vorspringenden Teilen der Front- und Rückseiten der Transportelemente angeordnet sein. Gemäß dieser Weiterbildung sind die Lagerelemente derart an den Transportelementen angeordnet, dass der maximale Abstand der an derselben Führungsschiene angreifenden Lagerelemente in Längsrichtung, d. h. in Transportrichtung, zumindest aber der maximale Abstand zweier beliebiger Lagerelemente aus der Gesamtheit der Lagerelemente eines Transportelements in Längsrichtung größer als die minimal erreichbare Transportteilung ist. Beispielsweise kann bei einem Doppelschienensystem jeweils ein Paar von in Längsrichtung um einen Abstand D voneinander beabstandeten Führungsrollen pro Schiene vorgesehen sein, wobei der Abstand D größer als die minimal erreichbare Transportteilung ist. Insbesondere können die Lagerelemente, insbesondere Rollen, an den maximal vorspringenden Teilen der Transportelemente angebracht sein. Um sich nicht gegenseitig zu behindern, können die Rollen der Front- gegenüber den Rollen der Rückseite um 90 Grad verkippt angeordnet werden. Alternativ können die Rollen der Frontseite auf einer Innenseite einer Führungsschiene angreifen, während die Rollen der Rückseite auf einer Außenseite der Führungsschiene angreifen, oder umgekehrt, wobei Innen- und Außenseite bzgl. der Mittellinie eines Doppelschienensystems definiert sind.

Durch Vergrößerung des Abstandes der Lagerelemente können die Transportelemente wesentlich höhere Belastungen aufnehmen. Beispielsweise sind die Transportelemente wesentlich belastungsfähiger gegenüber senkrecht zur Bewegungsrichtung wirkenden Kräften, wie sie beispielsweise bei einem Drehmoment auf das Transportelement aufgrund der Behälterbehandlung auftreten können. Die Lagerelemente werden bei größerem Abstand weniger belastet. Werden die Transportelemente durch die magnetische Wechselwirkung selbst an der Transportbahn gehalten, so erhöht sich die Betriebssicherheit, da die Transportelemente sicherer an einer Führungsschiene gehalten werden können. Bei gleichbleibendem Rollenabstand hingegen ermöglichen die erfindungsgemäßen Transportelemente eine kleinere Transportteilung und somit einen höheren Durchsatz an Behältern pro Zeiteinheit. Da der Transport in Behälterbehandlungsanlagen häufig den limitierenden Faktor in Bezug auf den Durchsatz darstellt, tragen die beschriebenen Weiterbildungen zur Erhöhung der Wettbewerbsfähigkeit linearer Transportsysteme in der Getränke verarbeitenden Industrie bei.

Gemäß einer speziellen Weiterbildung kann entweder die Frontseite oder die Rückseite eine im Wesentlichen konvexe Form besitzen und entsprechend die Rückseite bzw. Frontseite eine im Wesentlichen konkave Form besitzen. Im Wesentlichen konvex und im Wesentlichen konkav sind hierbei derart zu verstehen, dass die schienenseitig gelegenen äußeren Teile, kurz die seitlichen Teile, der Front- bzw. Rückseite weiter zurücktreten bzw. weiter vorspringen als alle anderen Teile der Front- bzw. Rückseite. Die bedeutet jedoch nicht, dass die Front- bzw. Rückseite lediglich nur einen Vorsprung bzw. nur eine Ausnehmung aufweist. Im Wesentlichen konvexe bzw. konkave Ausbildungen der Front- und Rückseite lassen sich insbesondere spiegelsymmetrisch bzgl. einer Mittelebene der Transportelemente, die die Transportrichtung enthält, und damit besonders einfach und seitenstabil gestalten.

Gemäß einer alternativen Weiterbildung können die Transportelemente im Wesentlichen keil- oder winkelförmig ausgebildet sein, wobei aufeinanderfolgende Transportelemente um 180 Grad gedreht an der Transportbahn angeordnet sind. Dieses Drehen der Transportelemente bezieht sich hierbei lediglich auf das Fahrwerk, also die Lagerung und das Sekundärteil, der Transportelemente. Eventuelle Greifvorrichtungen oder Aufbauten werden selbstverständlich gemäß den Anforderungen der Prozessstrecke ausgerichtet. Hierfür kann es vorteilhaft sein, an einem entsprechenden Transportelement beispielsweise verschiedene Bohrungen oder andere Ausnehmungen und / oder Fixiervorrichtungen derart vorzusehen, dass ein "Einheitstransportelement" hergestellt werden kann, an das dann die jeweils benötigten Fixiervorrichtungen unabhängig von der Ausrichtung des Transportelements angebracht werden können. Eine Keil- oder Winkelform bedeutet dabei, dass eine Längsseite der Transportelemente eine größere Ausdehnung besitzt als die andere Längsseite. Auf diese Weise können um 180 Grad zueinander gedrehte Transportelemente soweit ineinander gefahren werden, dass die minimal erreichbare Transportteilung geringer als die Längsausdehnung der längeren Längsseite ist. Die Transportelemente werden dabei, wie oben erwähnt, paarweise ineinander gefahren.

Gemäß einer weiteren Weiterbildung können die Transportelemente jeweils Rollen aufweisen, deren Anordnung in einer Ebene des Fahrwerks inversionssymmetrisch ist. Die Rollenanordnung hat somit eine C₂ Symmetrie. Das Fahrwerk dieser Transportelemente hat beispielsweise eine Treppen- oder Z-Form, welche besonderes stabil gegen Drehmomente ist.

Die Transportelemente können zudem mittels sogenannter gotischer Rollen an einer oder mehreren Führungsschienen der Transportbahn gelagert sein. Gotische Rollen verfügen über eine gotische Laufrille, deren Profil von der Kreisbogenform abweicht. Aus diesem Grund haben gotische Rollen stets zwei Kontaktpunkte mit einer Führungsschiene mit kreisförmigem Querschnitt. Eine Lagerung mit gotischen Rollen ist daher besonders reibungs- und verschleißarm.

Da die Kontaktpunkte der gotischen Rollen an der wenigstens einen Führungsschiene in einem Kurvenstück der Transportbahn auf Bahnen mit unterschiedlichen Krümmungsradien laufen können, können die gotischen Rollen der Transportelemente entlang ihrer Symmetrieebene senkrecht zu ihrer Drehachse in zwei Hälften geteilt ausgebildet sein, wobei die beiden Hälften derart an dem jeweiligen Transportelement gelagert sind, dass sie unabhängig voneinander rotieren können. Dementsprechend kann jede Hälfte mit der dem jeweiligen Krümmungsradius entsprechenden Rotation ohne Schlupf durch die Kurve fahren, sodass die Gesamtreibung und der Verschleiß reduziert werden können.

Alternativ können auch Rollen mit einer konvexen, konkaven oder zylindrischen Lauffläche verwendet werden. Die entsprechenden Führungsschienen können dabei ein entsprechend konkaves, konvexes oder ebenes Kontaktprofil aufweisen.

Wie oben erwähnt kann die Transportbahn wenigstens eine Führungsschiene aufweisen. Dementsprechend können die Transportelemente jeweils in Längsrichtung voneinander beabstandete Lagerelemente, insbesondere Rollen, mittels derer sie bewegbar an der Transportbahn gelagert sind, und ein Sekundärteil aufweisen, wobei das Sekundärteil wie oben beschrieben derart ausgebildet ist, dass das jeweilige Transportelement durch magnetische Wechselwirkung mit dem wenigstens einen Langstator der Transportbahn entlang der Transportbahn bewegt werden kann. Die eine oder mehreren Führungsschienen können dabei je nach Anforderung an die Führung der Transportelemente und den Transport der Behälter ausgebildet sein. Beispielsweise sind Führungsschienen denkbar, welche ein kreissegmentförmiges Querschnittsprofil aufweisen, auf dem die oben erwähnten Führungsrollen abrollen. Zur besseren Stabilisierung der Fahrt können Führungsschienen auf beiden Seiten der Transportelemente, u. U. sogar jeweils ein oberes und ein unteres Schienenpaar, vorgesehen sein. Je nach Ausführung der Transportelemente genügt jedoch u. U. auch eine einzige Führungsschiene.

Im Stand der Technik werden der oder die Langstatoren, die die Transportelemente antreiben, parallel zu den Führungsschienen angeordnet und häufig mechanisch mit diesen oder einer die Führungsschienen tragenden Trägerkonstruktion verbunden. Dies ist sowohl bei vertikal angeordneten Langstatoren der Fall, bei denen der Luftspalt zwischen den Magneten des Sekundärteils der Transportelemente und den Magneten des Langstators vertikal ausgerichtet ist, als auch bei horizontal angeordneten Langstatoren, bei denen der Luftspalt zwischen den Magneten des Sekundärteils der Transportelemente und den Magneten des Langstators horizontal ausgerichtet ist. Das Sekundärteil der Transportelemente und insbesondere die Ausrichtung dessen Permanent- und/oder nicht schaltenden Elektromagnete ist dabei an die Ausrichtung der Langstatoren angepasst. Die Begriffe "vertikal" und "horizontal" beziehen sich hier und im Folgenden auf eine Aufstandsfläche des Transportsystems. Bei paralleler Führung von Langstatoren und Führungsschienen ändert sich jedoch bei einer Kurvenfahrt der Transportelemente die relative Lage der Magneten des Sekundärteils und der Langstatoren, da es aufgrund des endlichen Abstandes der Lagerelemente eines Transportelements an der Führungsschiene zwingend zu Überschneidungen kommt, so wie sie auch im Schienenbau für reguläre Schienenfahrzeuge aufgrund der Länge von Wagons bekannt sind. Dies führt dazu, dass sich bei vertikaler Anordnung der Langstatoren die Ausdehnung des Luftspaltes ändert, während sich bei horizontaler Anordnung der Langstatoren die Überdeckung der Magneten von Sekundärteil und Langstator ändert. In beiden Fällen wird die magnetische Wechselwirkung negativ beeinflusst, da sich durch Änderung der Breite des Luftspalts bzw. der Überdeckung auch die Normal- und Vortriebskräfte ändern, was durch entsprechende Ansteuerung der Magnete aufwändig kompensiert werden muss. Dieser Effekt ist umso größer, je größer der Längsabstand der Lagerelemente ist, sodass der Effekt insbesondere bei den oben beschriebenen Weiterbildungen der Transportelemente verstärkt zu Tage tritt.

Die vorliegende Erfindung löst dieses Problem, indem von der parallelen Führung von Führungsschiene und Langstator bewusst abgewichen wird. Insbesondere können die wenigstens eine Führungsschiene und der wenigstens eine Langstator derart angeordnet werden, dass der Verlauf der Führungsschiene und der Verlauf des Langstators abschnittsweise von einem paralleln Verlauf abweichen. Auf diese Weise kann die zwingend auftretende Überschneidung ohne aufwändige elektrische Ansteuerung kompensiert werden.

Beispielsweise kann die Transportbahn wenigstens ein Kurvenstück und wenigstens ein gerades Stück aufweisen, wobei der relative Verlauf der Führungsschiene und des Langstators im Bereich des Kurvenstücks vom relativen Verlauf der Führungsschiene und des Langstators im Bereich des geraden Stücks abweicht. Insbesondere können Führungsschiene und Langstator im Bereich des geraden Stücks parallel geführt werden, während ihr Verlauf im Bereich des Kurvenstücks vom Krümmungsradius des Kurvenstücks, genauer der Führungsschiene, abhängt. Ist der Krümmungsradius über das gesamte Kurvenstück konstant, so können Führungsschiene und Langstator zwar entlang des Kurvenstücks parallel geführt werden, jedoch mit einem anderen Abstand voneinander als entlang des geraden Stücks.

Insbesondere kann der Verlauf der Führungsschiene und des Langstators im Bereich des Kurvenstücks in Abhängigkeit von einem Abstand der Lagerelemente der Transportelemente in Längsrichtung und einem, insbesondere variablen, Krümmungsradius des Kurvenstücks derart vom Verlauf im Bereich des geraden Stücks abweichen, dass die Breite eines Luftspalts oder die Fläche eines Überlappungsbereichs zwischen dem Langstator und dem Permanent- und/oder Elektromagneten des Sekundärteils der Transportelemente entlang des gesamten Kurvenstücks und des geraden Stücks möglichst konstant ist. Dabei bezieht sich der erste Fall wie oben erwähnt auf eine vertikale Anordnung des Langstators, während sich der zweite Fall auf eine horizontale Anordnung des Langstators bezieht. Der Abstand der Lagerelemente in Transportrichtung bezeichnet hier und im Folgenden den maximalen Abstand der an einer Führungsschiene gelagerten Lagerelemente, insbesondere zweier Führungsrollen, genauer derer Kontaktpunkte mit der Führungsschiene. Dieser definiert die Überschneidung bei der Kurvenfahrt bzgl. der Führungsschiene. Somit wird der Verlauf des Langstators gemäß dieser Weiterbildung spezifisch für eine spezielle Ausbildung der Transportelemente angepasst. Dabei wird der (lokale) Krümmungsradius der Führungsschiene entlang des Kurvenstücks berücksichtigt, um eine konstante Breite des Luftspalts bzw. eine konstante Fläche des Überlappungsbereichs, und somit eine konstante Normal- und Vortriebskraft, zu erzielen. Die genannten Parameter definieren den Verlauf des Langstators in Relation zu der Führungsschiene eindeutig. Dies gilt selbstverständlich auch, wenn mehr als eine Führungsschiene und mehr als ein Langstator vorgesehen sind. Dabei können die Verläufe der beiden Führungsschienen bei Doppelschienenführung auch von der Parallelität abweichen, falls die Längsabstände der Lagerelemente an den beiden Schienen verschieden sind, so wie dies beispielsweise bei den oben erwähnten keil- oder winkelförmigen Fahrwerken der Fall ist.

Gemäß einer speziellen Weiterbildung kann die Transportbahn zwei parallel geführte Führungsschienen, an denen die Transportelemente mittels der Lagerelemente bewegbar gelagert sind, und zwei Langstatoren eines beidseitigen Linearmotors aufweisen, wobei der Verlauf des Langstators in der Außenkurve von der entsprechenden Führungsschiene weg und der Verlauf des Langstators in der Innenkurve zu der entsprechenden Führungsschiene hin verlagert ist. Anders ausgedrückt ist der Abstand des Langstators in der Außenkurve von der die Transportrichtung umfassenden (lokalen) Mittelebene zwischen den parallel geführten Führungsschienen kleiner als der Abstand des Langstators in der Innenkurve von dieser Mittelebene. Betrachtet man nur die Abstände von dieser Mittelebene, also eine Projektion auf eine Ebene senkrecht zur Mittelebene, so ist der Abstand zwischen Führungsschiene und Langstator in der Außenkurve größer als der Abstand zwischen Führungsschiene und Langstator in der Innenkurve des Kurvenstücks. Durch die Anpassung dieser Abstände bleiben die Breiten der Luftspalte zwischen den Langstatoren und dem zwischen den beiden Langstatoren geführten Sekundärteil der Transportelemente auch in der Kurvenfahrt konstant.

Entsprechend kann bei horizontaler Anordnung des Langstators eine Verschiebung des Langstators zur Innenkurve, d. h. zu der auf der Seite der Innenkurve liegenden Führungsschiene, hin, sicherstellen, dass der Überlappungsbereich zwischen Langstator und den Magneten des Sekundärteils konstant bleibt. Dadurch kann während der gesamten Kurvenfahrt eine konstante Normal- und Vortriebskraft garantiert werden.

In manchen Bereichen des Transportsystems können größere Vortriebskräfte erforderlich sein als in anderen. Dies kann beispielsweise durch den Behandlungszustand der transportierten Behälter entlang der Prozessstrecke der Behälterbehandlungsanlage erforderlich sein. Beispielsweise können zu Beginn einer Prozessstrecke leere Behälter mittels des Transportsystems zu stationären Füllventilen einer Füllvorrichtung transportiert werden. Da die leeren Behälter, insbesondere wenn es sich um Kunststoffflaschen handelt, sehr leicht sind, müssen die Transportelemente für deren Transport lediglich eine nur geringe Vortriebskraft aufbringen. Unmittelbar nach dem Befüllen sind die Behälter sehr viel schwerer, sodass nun auch eine deutlich größere Vortriebskraft benötigt wird.

Gemäß einer Weiterbildung können daher einzelne Abschnitte der Transportbahn unterschiedlichen Beladungszuständen der Transportelemente zugeordnet werden, die sich beispielsweise aus den unterschiedlichen Behandlungszuständen der transportierten Behälter ergeben können, wobei der relative Verlauf des Langstators zur Führungsschiene in Abhängigkeit von dem jeweiligen Beladungszustand der Transportelemente entlang der Transportbahn variiert. Anders ausgedrückt kann der Abstand zwischen Führungsschiene und Langstator in Abhängigkeit von dem jeweiligen Beladungszustand variieren. Insbesondere kann dieser Abstand derart variieren, dass die jeweils gewünschte Vortriebskraft bei gleichbleibender Bestromung der elektrischen Wicklungen des Langstators erzielt werden kann.

Gemäß einer speziellen Weiterbildung kann der relative Verlauf des Langstators zur Führungsschiene derart variieren, dass der Abstand zwischen Sekundärteil und Langstator in Abschnitten höherer Beladungszustände kleiner ist als der Abstand zwischen Sekundärteil und Langstator in Abschnitten geringerer Beladungszustände. Dies kann sowohl für vertikal als auch für horizontal angeordnete Langstatoren gelten. Bei vertikal angeordneten Langstatoren, insbesondere bei einem beidseitigen Linearmotor, kann der Abstand in der oben genannten Projektion zwischen der jeweiligen Führungsschiene und dem Langstator in Abschnitten höherer Beladungszustände größer sein als in Abschnitten geringerer Beladungszustände. Dabei ist es unerheblich, ob es sich um ein Kurvenstück oder ein gerades Stück der Transportbahn handelt. Zudem gelten die obigen Beschreibungen selbstverständlich auch entsprechend für Transportsystem mit mehreren Führungsschienen. Die Variation des relativen Verlaufs in Abhängigkeit vom jeweiligen Beladungszustand stellt sicher, dass entlang der kompletten Fahrstrecke stets die optimalen Vortriebskräfte zur Verfügung stehen.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 zeigt ein exemplarisches Transportsystem mit beidseitigem Linearmotor und Transportelement, wie es im Stand der Technik bekannt ist.
Figur 2 zeigt einen Querschnitt des in Figur 1 gezeigten Transportsystems.
Figur 3 zeigt Form und Aufbau exemplarischer im Stand der Technik bekannter Transportelemente eines linearen Transportsystems.
Figur 4 zeigt eine erste exemplarische Ausführung eines linearen Transportsystems gemäß der vorliegenden Erfindung.
Figur 5 zeigt eine Detailzeichnung des Fahrwerks eines Transportelements gemäß der vorliegenden Erfindung.
Figur 6 zeigt zwei alternative Weiterbildungen des Fahrwerks eines Transportelements gemäß der vorliegenden Erfindung.
Figur 7 zeigt zwei weitere alternative Weiterbildungen des Fahrwerks eines Transportelements gemäß der vorliegenden Erfindung.
Figur 8 zeigt schematisch eine gotische Führungsrolle gemäß der vorliegenden Erfindung.
Figur 9A zeigt ein Beispiel der parallelen Führung von Führungsschiene und Langstator, wie sie im Stand der Technik bekannt ist.
Figur 9B zeigt ein Kurvenstück der Transportbahn, in der gemäß der vorliegenden Erfindung von der parallelen Führung abgewichen wird.
Figur 10 zeigt eine Erweiterung des Prinzips aus Figur 9B auf ein Doppelschienensystem mit beidseitigem Linearmotor.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

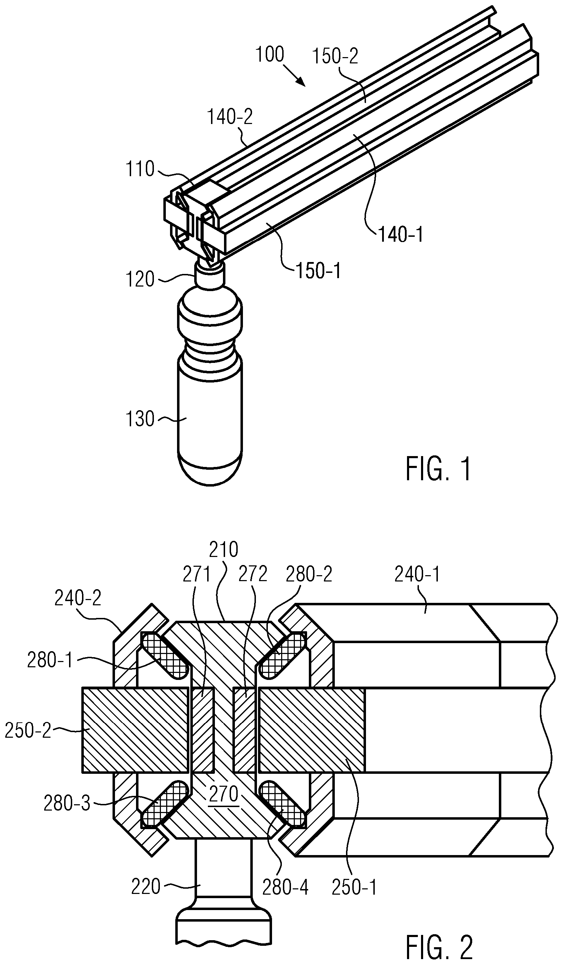

In der Figur 1 ist eine dreidimensionale Ansicht eines linearen Transportsystems gezeigt, wie es im Stand der Technik bekannt ist und beispielsweise in der DE 10 2013 218 389 A1 beschrieben wurde. Das gezeigte lineare Transportsystem 100 umfasst eine Transportbahn, welche eine erste Führungsschiene 140-1, eine zweite Führungsschiene 140-2, einen ersten Langstator 150-1 und einen zweiten Langstator 150-2 aufweist. Das gezeigte Transportsystem ist somit als Doppelschienensystem mit beidseitigem Linearmotor ausgebildet.

Zwischen den beiden Führungsschienen werden die Transportelemente 110 gezielt über magnetische Wechselwirkung mit den Langstatoren 150-1 und 150-2 bewegt. Das gezeigte Transportelement 110 transportiert dabei mittels eines Greifelements 120, beispielsweise einer im Bereich des Neckrings angreifenden Neckhandlingklammer, einen oder mehrere Behälter 130, hier exemplarisch als Kunststoffflasche gezeigt. In der dargestellten Ausführung ist die Kunststoffflasche hängend unterhalb des Transportelements 110 angeordnet. Es versteht sich jedoch, dass der transportierte Behälter auch stehend oder liegend auf dem Transportelement 110, wenn nötig mittels einer entsprechenden Haltevorrichtung, transportiert werden kann.

Figur 2 zeigt einen Querschnitt durch ein exemplarisch dargestelltes Transportelement, wie es im Stand der Technik bekannt ist. Das gezeigte Transportelement 210 wird zwischen zwei parallel zueinander angeordneten Führungsschienen 240-1 und 240-2 über magnetische Wechselwirkung mit den an den Führungsschienen befestigten und parallel zu diesen verlaufenden Langstatoren 250-1 und 250-2 gesteuert bewegt, wobei Führungsrollen 280-1 bis 280-4 als Lagerelemente des Transportelements in Kontakt mit dafür eigens an den Führungsschienen 240-1 und 240-2 vorgesehenen Führungsrinnen stehen. Alternativ können auch Spurkränze oder Führungskanäle verwendet werden.

Neben dem Greifelement 220 für den zu transportierenden Behälter weist das hier dargestellte Transportelement 210 ein Sekundärteil 270 auf, welches durch Wechselwirkung mit den Linearmotorsträngen 250-1 und 250-2 dem Vortrieb des Transportelements entlang der Transportbahn dient. Hierzu weist das Sekundärteil einen oder mehrere Permanentmagneten und/oder nicht schaltende Elektromagnete auf, von denen hier exemplarisch lediglich zwei magnetische Pole 271 und 272 dargestellt sind. In der hier dargestellten exemplarischen Ausführung umfasst das Sekundärteil auf beiden Seiten getrennt voneinander angeordnete Permanentmagnete, welche auf einer Trägerplatte angeordnet sind. Eine Vielzahl alternativer Weiterbildungen ist vorstellbar und im Stand der Technik bekannt. Es versteht sich, dass Form und Ausführung des Sekundärteils der im Folgenden beschriebenen Transportelemente an deren spezielle Form angepasst werden können.

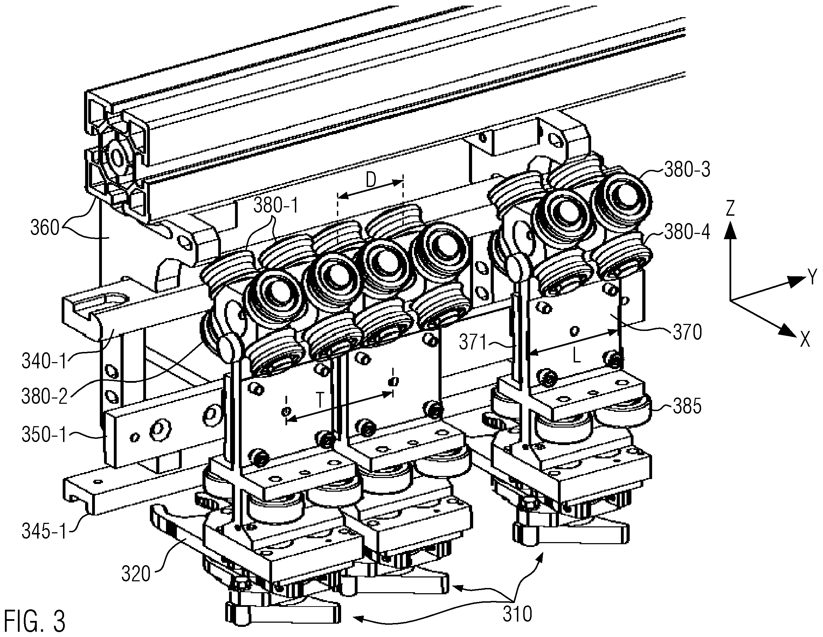

Figur 3 zeigt Form und Aufbau exemplarischer im Stand der Technik bekannter Transportelemente eines linearen Transportsystems. Der Einfachheit halber ist in dieser Figur nur eine Seite des Linearmotors dargestellt. Es versteht sich jedoch, dass entsprechende Elemente wie Führungsschienen und Langstator auch auf der nicht dargestellten Seite angeordnet sein können. In der hier dargestellten dreidimensionalen Ansicht ist eine Vielzahl von gleichartig ausgebildeten Transportelementen 310 an einer Führungsschiene 340-1 über Rollen 380-1 und 380-2 als Lagerelemente bewegbar angeordnet. Die Führungsschiene 340-1 wird von einer Trägerkonstruktion 360 in Form eines Trägerrahmens gehalten. Neben der Führungsschiene 340-1, welche ein halbkreisförmiges Profil aufweist, auf dem die Rollen 380-1 und 380-2 abrollen, trägt die Trägerkonstruktion 360 einen Langstator 350-1 und eine Laufschiene 345-1, auf der zusätzliche Stützrollen 385 der Transportelemente 310 laufen. Der Einfachheit halber ist der Langstator 350-1 in dieser Figur ohne elektrische Wicklungen dargestellt. Diese wechselwirken zum Antrieb der Transportelemente mit den an dem Sekundärteil 370 der Transportelemente 310 befestigten Permanentmagneten und/oder nicht schaltenden Elektromagneten 371. Die dargestellten Transportelemente 310 weisen weiterhin Führungsrollen 380-3 und 380-4 auf, welche auf einer zweiten, nicht dargestellten Führungsschiene abrollen. Zudem verfügt jedes Transportelement 310 über ein Greifelement 320 zum form- oder kraftschlüssigen Halten der zu transportierenden Behälter. Dieses Greifelement kann die zu transportierenden Behälter passiv, z. B. über eine federvorgespannte Klammer, oder aktiv über eine schaltbare Klammer halten.

Die im Stand der Technik bekannten Transportelemente weisen wie in Figur 3 gezeigt in der Mittelebene zwischen den Langstatoren, d. h. in der yz-Ebene, ein im Wesentlichen rechteckiges Profil auf. Dieses bestimmt einerseits die Längsausdehung **L** der Transportelemente, d. h. deren maximale Ausdehnung in Transportrichtung, sowie die minimal erreichbare Teilung **T,** d. h. den minimalen Abstand sich entsprechender Punkte aufeinanderfolgender Transportelemente in Transportrichtung, auf den die Transportelemente zusammengefahren werden können, ohne sich gegenseitig, beispielsweise durch Überstände der Führungsrollen 380-1 bis 380-4, zu behindern. Aufgrund des rechteckigen Profils der Transportelemente kann diese Transportteilung **T** nicht geringer als die Längsausdehnung **L** der Transportelemente sein. Wie in der Figur 3 gezeigt, können sich entsprechende Punkte der Transportelemente verwendet werden, um den Abstand in Transportrichtung zu bestimmen. Beispielsweise können die Schwerpunkte der Transportelemente 310 hierzu verwendet werden.

Die in der Figur 3 gezeigten Transportelemente werden jeweils über zwei nahe beieinander liegende Führungsrollen, beispielsweise 380-1, an der jeweiligen Führungsschiene 340-1 gelagert, um eine kompakte Ausführung der Transportelemente und damit einen hohen Durchsatz an Behältern zu ermöglichen. Der Abstand **D** dieser Führungsrollen wird beispielsweise wie gezeigt über den Abstand der Lager der Rollen definiert und ist ein wesentlicher Faktor zur Bestimmung der Stabilität der Führung gegenüber einem Drehmoment um die x-Achse, wie es bei der Behandlung der transportierten Behälter auftreten kann. Da dieser Abstand **D** aufgrund der kompakten Ausbildung der Transportelemente gering ist, ist einerseits keine ausreichende Stabilität gegeben, andererseits ergibt sich wie oben erwähnt ein ungünstiges Verhältnis aus Belastbarkeit und Verschleiß der Lagerelemente. Insbesondere gilt für die im Stand der Technik bekannten Transportelemente 310, dass der Abstand **D** stets deutlich geringer als die minimal erreichbare Transportteilung **T** ist.

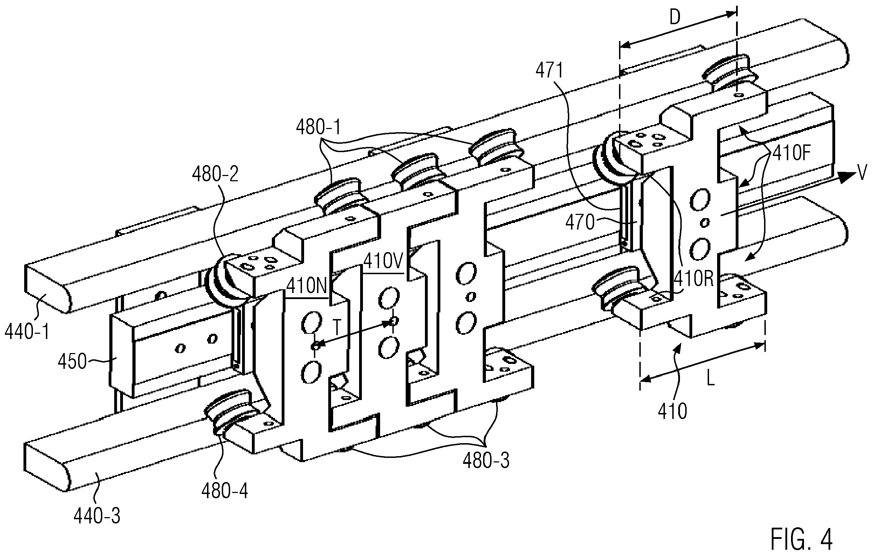

Figur 4 zeigt eine erste exemplarische Ausführung eines linearen Transportsystems gemäß der vorliegenden Erfindung. In der gezeigten nicht limitierenden Weiterbildung sind die Transportelemente 410 über Führungsrollen 480-1 bis 480-4 an zwei parallel geführten Führungsschienen 440-1 und 440-3 gelagert, wobei zwischen den Führungsschienen ein Langstator 450 angeordnet ist. Die beispielhafte Darstellung zeigt einen einseitigen Linearmotor, bei dem die Transportelemente 410 von dem vertikal ausgerichteten Langstator 450 durch magnetische Wechselwirkung mit den Magneten 471 des Sekundärteils 470 der Transportelemente 410 seitlich an den Führungsschienen gehalten werden. Es versteht sich jedoch, dass die vorliegende Erfindung nicht auf diese Anordnung beschränkt ist. Selbstverständlich können die Transportelemente 410 auch beidseitig geführt und auch beidseitig angetrieben werden. Ebenso kann die gezeigte Konfiguration in eine horizontale Ebene gedreht werden, sodass die Transportelemente 410 wie Wagons auf dem Doppelschienensystem 440-1 und 440-3 bewegt werden.

Entscheidend ist für den Charakter der vorliegenden Erfindung lediglich, dass die Frontseiten 410F und Rückseiten 410R der Transportelemente 410 derart geformt sind, dass die Transportelemente soweit ineinander gefahren werden können, dass sich eine minimal erreichbare Transportteilung **T** ergibt, die geringer als die Längsausdehnung L der Transportelemente ist. Front- und Rückseite 410F bzw. 410R eines Transportelements 410 sind hierbei anhand der bevorzugten Transportrichtung v, die sich aus der Anordnung des Transportsystems in der Behälterbehandlungsanlage ergibt, definiert. Die sich auf Front- und Rückseite beziehenden Beschreibungen in dieser Offenbarung lassen sich jedoch auch ohne Einschränkung auf um 180 Grad gedrehte Transportelemente übertragen.

Das Profil bzw. die Kontur des der Einfachheit halber auf das Fahrwerk reduzierten Transportelements 410 in einer Ebene, welche den Bewegungsvektor **v** enthält und parallel zu der von den Führungsschienen 440-1 und 440-3 aufgespannten Ebene ist, ist nun nicht mehr im Wesentlichen rechteckig, sondern vielmehr durch Vorsprünge und Ausnehmungen gekennzeichnet, welche wie in Figur 4 gezeigt ineinander gefahren werden können. Dabei kann ein nachlaufendes Transportelement 410N soweit an ein vorauslaufendes Transportelement 410V herangefahren werden, dass die minimal erreichbare Transportteilung **T** geringer als die maximale Längsausdehnung **L** der Transportelemente, ja selbst geringer als der Abstand **D** der Führungsrollen 480-1 und 480-2 wird. In der hier gezeigten Weiterbildung ergibt sich dieser Abstand **D** als maximaler Abstand zweier beliebiger Lagerelemente in Transportrichtung **v.** Die mögliche Überschneidung der Front- und Rückseiten der Fahrwerke der Transportelemente ermöglicht eine reduzierte Transportteilung **T** bei gleichzeitiger Vergrößerung des Abstandes **D** der Lagerelemente. Dadurch können sowohl der Durchsatz an Behältern als auch die Stabilität der Führung erhöht und gleichzeitig der Verschleiß der Lagerelemente reduziert werden. Beispielsweise kann für Transportelemente einer Längsausdehnung von 90 bis 110 mm eine minimale Transportteilung von 40 bis 60 mm erreicht werden. Die Transportelemente können dabei derart ausgebildet sein, dass die minimal erreichbare Transportteilung **T** kleiner als 85% der Längsausdehnung, bevorzugt kleiner als 55%, besonders bevorzugt kleiner als 40% der Längsausdehnung **L** der Transportelemente ist.

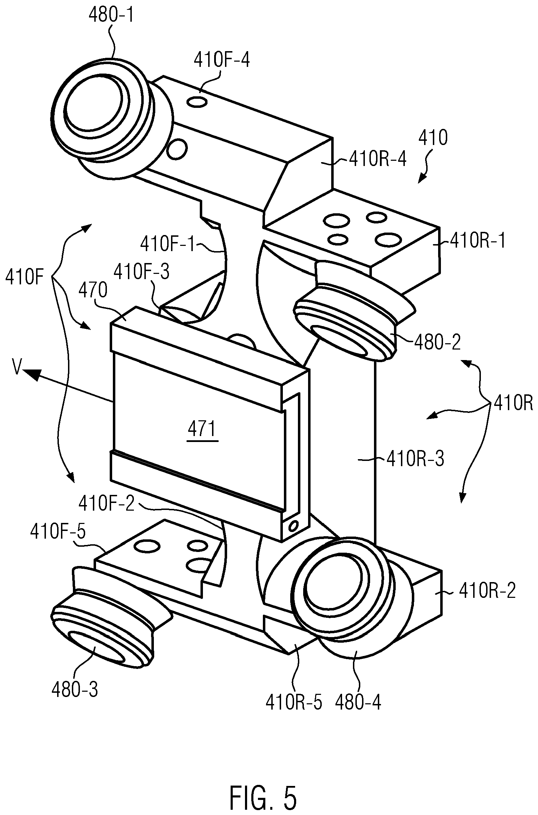

Die erwähnte mögliche Verzahnung von Frontseite 410F und Rückseite 410R eines Transportelements lässt sich besser anhand der Detailzeichnung eines Transportelements gemäß der vorliegenden Erfindung in Figur 5 nachvollziehen. Die Frontseite 410F weist neben den Ausnehmungen 410F-1 und 410F-2 mehrere Vorsprünge 410F-3 bis 410F-5 auf. Dementsprechend weist die Rückseite 410R entsprechend gestaltete Vorsprünge 410R-1 und 410R-2 und Ausnehmungen 410R-3 bis 410R-5 auf. Die Ausnehmungen und Vorsprünge sind dabei derart geformt, dass die Vorsprünge 410F-3 bis 410F-5 der Frontseite 410F in die Ausnehmung 410R-3 bis 410R-5 der Rückseite 410R und umgekehrt die Vorsprünge 410R-1 und 410R-2 der Rückseite 410R in die Ausnehmungen 410F-1 und 410F-2 der Frontseite 410F gefahren werden können. Dabei sind an den Vorsprüngen 410F-4 und 410F-5 sowie 410R-1 und 410R-2 die Führungsrollen 480-1 und 480-3 bzw. 480-2 und 480-4 angeordnet, um einen möglichst großen Abstand D der Lagerelemente zu erzielen. Um sich beim Ineinander Fahren der Transportelemente 410 nicht zu behindern, können die Führungsrollen 480-1 und 480-3 der Frontseite 410F zudem um 90 Grad gegenüber den Führungsrollen 480-2 und 480-4 der Rückseite 410R verkippt sein, wie es in der Figur 5 gezeigt ist. Dabei kann die relative Stellung der Rollen zur Ebene zwischen den Führungsschienen 440-1 und 440-3 von der hier exemplarischen 45 Grad-Stellung selbstverständlich abweichen. Die Kippstellung gestattet zudem auf einfache Weise, dass je zwei Führungsrollen 480-1 und 480-2 bzw. 480-3 und 480-4 an derselben Führungsschiene geführt werden können, was die Gesamtkonstruktion vereinfacht.

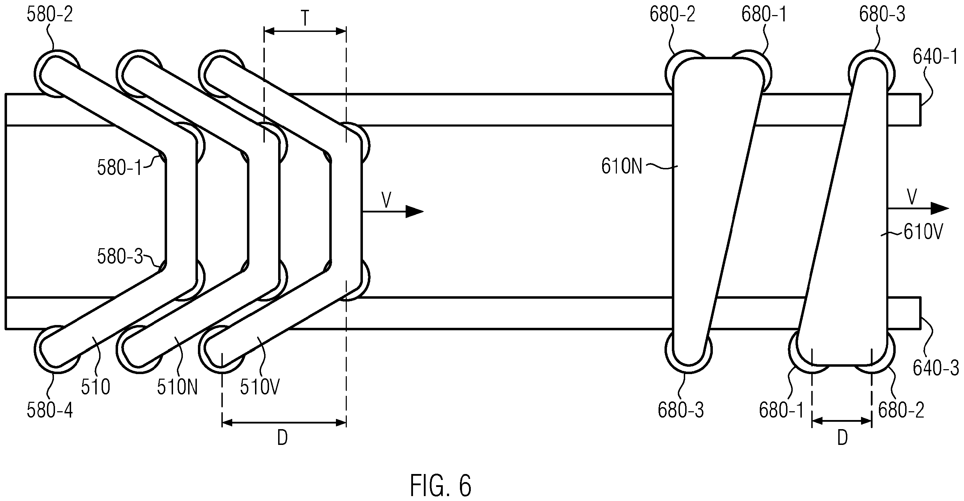

Zwei alternative Weiterbildungen der Transportelemente gemäß der vorliegenden Erfindung sind in der Figur 6 schematisch dargestellt. Auch hier beschränkt sich die Darstellung der Einfachheit halber auf das Fahrwerk der Transportelemente. Es versteht sich, dass weitere benötigte Elemente, wie Sekundärteil, Greifelemente und dergleichen, an geeigneter Stelle an den Transportelementen angeordnet werden können. Linker Hand sind Transportelemente 510 gezeigt, dessen Frontseite bzw. Rückseite eine im Wesentlichen konvexe bzw. konkave Form aufweist. Die gezeigten Transportelemente 510 sind mittels beidseitig angreifender Führungsrollen 580-1 und 580-2 an einer ersten Führungsschiene 640-1 und mittels beidseitig angreifender Führungsrollen 580-3 und 580-4 an einer zweiten Führungsschiene 640-3 gelagert. Aufgrund der U-förmigen Gestaltung der Fahrwerke kann ein nachlaufendes Transportelement 510N so weit in ein vorauslaufendes Transportelement 510V gefahren werden, dass die minimal erreichbare Transportteilung **T** erheblich geringer als der Abstand **D** der Lagerelemente in Transportrichtung v ist. Beispielsweise lässt sich bei einem Abstand **D** von 60 mm eine minimale Teilung **T** von 40 mm erreichen.

Eine etwas andere Weiterbildung der Transportelemente ist auf der rechten Seite der Figur 6 dargestellt. Hier sind die Fahrwerke der Transportelemente winkelförmig ausgebildet, wobei aufeinanderfolgende Transportelemente 610N und 610V stets um 180 Grad gedreht an den Führungsschienen 640-1 und 640-3 angeordnet sind. Somit ist das nachlaufende Transportelement 610N exemplarisch mit zwei Rollen 680-1 und 680-2 an der ersten Führungsschiene 640-1 und mit lediglich einer Rolle 680-3 an der zweiten Führungsschiene 640-3 gelagert, während das vorauslaufende Transportelement 610V mit zwei Rollen 680-1 und 680-2 an der zweiten Führungsschiene 640-3 und mit lediglich einer Rolle 680-3 an der ersten Führungsschiene 640-1 gelagert ist. Der Abstand **D** der Lagerelemente ist hierbei als der maximale Abstand zweier Rollen definiert. Aufgrund des keilförmigen Aufbaus des Transportelements über den winkelförmig angeordneten Rollen 680-1 bis 680-3 kann eine Transportteilung **T** erzielt werden, die geringer als die Längsausdehnung der Transportelemente ist. Dabei werden die Transportelemente gemäß dieser Weiterbildung immer paarweise ineinander gefahren.

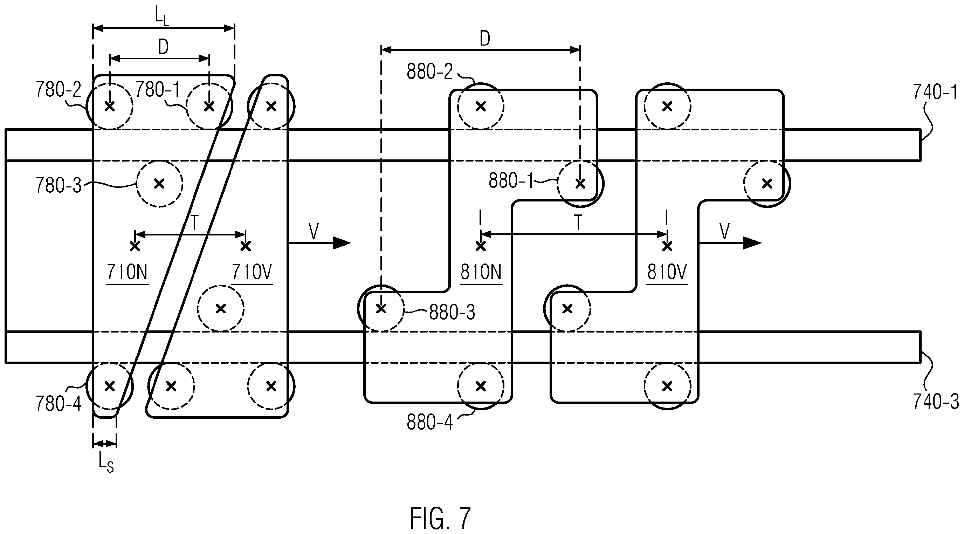

Eine ähnliche Weiterbildung mit einem keilförmigen Fahrwerk ist im linken Teil der Figur 7 schematisch dargestellt. Hier werden die Transportelemente zwecks Stabilisierung gegen Drehmomente mit drei Führungsrollen 780-1 bis 780-3 an der ersten Führungsschiene 740-1 gelagert, während sie wie zuvor nur mit einer Führungsrolle 780-4 an der zweiten Führungsschiene 740-3 gelagert sind. Die Transportelemente besitzen somit eine lange Längsseite mit Ausdehnung **L_{L}** und eine kurze Längsseite mit Ausdehnung **Ls.** Der Abstand **D** der Lagerelemente ergibt sich als Abstand der Rollen 780-1 und 780-2, da dies der größte Abstand in Längsrichtung ist. Die Transportteilung **T** zwischen sich entsprechenden Punkten des nachlaufenden Transportelements 710N und des vorauslaufenden Transportelements 710V ist erkennbar geringer als die Ausdehnung **L_{L}** der langen Seite. Darüber hinaus ist die Teilung zwischen zwei aufeinanderfolgenden Paaren von um 180 Grad gedrehten Transportelementen ebenfalls geringer als deren Längsausdehnung, sodass sich ein Transportstrom mit hohem Durchsatz ergibt.

Auf der rechten Seite der Figur 7 ist schließlich eine Weiterbildung dargestellt, bei der die Transportelemente ein treppen- bzw. Z-förmiges Fahrwerk besitzen. Dieses ist zumindest bezüglich der Anordnung der Führungsrollen 880-1 bis 880-4 inversionssymmetrisch bzgl. eines Inversionspunktes I ausgebildet, sodass das Fahrwerk eine C₂ Symmetrie aufweist. Der maximale Abstand D der Lagerelemente ergibt sich in diesem Fall für die an unterschiedlichen Führungsschienen 740-1 und 740-3 angeordneten Führungsrollen 880-1 und 880-3, welcher auch hier größer als die minimal erreichbare Teilung **T** zwischen nachlaufendem Transportelement 810N und vorauslaufendem Transportelement 810V ist. Die spezielle Anordnung der Führungsrollen verleiht diesem Fahrwerk eine besonders hohe Stabilität gegen Drehmomente.

Eine Vielzahl weiterer Ausführungen ist im Rahmen der vorliegenden Erfindung denkbar, deren minimal erreichbare Transportteilung geringer als die Längsausdehnung der Transportelemente ist. Dabei können die hier explizit dargestellten und beschriebenen Weiterbildungen gemäß den Anforderungen der Prozessstrecke angepasst werden, ohne das beschriebene Grundprinzip zu verletzen.

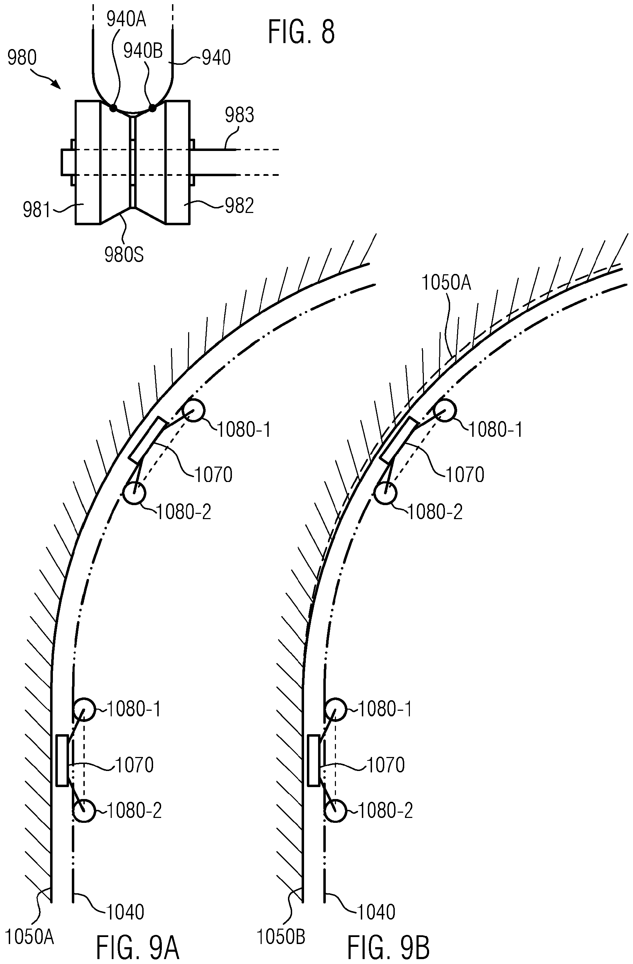

Figur 8 zeigt eine spezielle Ausführung einer Führungsrolle gemäß der vorliegenden Erfindung, die besonders gut zur Kurvenfahrt an kreisrunden Führungsschienen geeignet ist. Gotische Führungsrollen mit einem gotischen Rollenprofil 980S sind im Stand der Technik wohlbekannt. Beim Abrollen einer solchen Rolle an einer kreissegmentförmigen Führungsschiene 940 steht die Rolle über zwei Kontaktpunkte 940A und 940B in mechanischem Kontakt mit der Führungsschiene 940. Dadurch ergibt sich ein besonders reibungsarmes Abrollverhalten. Bildet die Führungsschiene 940 jedoch eine Kurve, so können die Kontaktpunkte 940A und 940B auf Kurven mit unterschiedlichen Krümmungsradien liegen, sodass erhöhte Reibung entstünde. Die gotische Rolle 980 gemäß der vorliegenden Erfindung löst dieses Problem, indem sie entlang ihrer Mittelebene senkrecht zur Rotationsachse in zwei Hälften 981 und 982 geteilt ausgebildet wird, welche sich aufgrund ihrer separaten Lagerung an der Achse 983 unabhängig voneinander, d. h. mit unterschiedlichen Rotationsgeschwindigkeiten, drehen können. Auf diese Weise können Schlupf und unnötige Reibung vermieden und der Rollenverschleiß reduziert werden.

Figur 9A zeigt ein Kurvenstück einer Transportbahn mit einseitiger Langstatoranordnung, wie sie im Stand der Technik bekannt ist. In der dargestellten Konfiguration rollen die Führungsrollen 1080-1 und 1080-2 der Transportelemente auf einer strich-gepunktet dargestellten Führungsschiene 1040 ab, während die Sekundärteile 1070 der Transportelemente zwischen der Führungsschiene 1040 und dem einseitig angeordneten Langstator 1050A mitgeführt werden. Da die Konstruktion aus Führungsrollen 1080-1 und 1080-2 sowie Sekundärteil 1070 im Allgemeinen starr ist, wie durch die gestrichelte Linie angedeutet, kommt es im Bereich des Kurvenstücks unvermeidbar zu Überschneidungen, wie sie auch von Wagons im Schienenverkehr oder Bussen bekannt sind. Dadurch wird der Sekundärteil 1070 im Bereich der Kurve näher an der Führungsschiene 1040 als im Bereich des geraden Stücks geführt, sodass sich umgekehrt der Luftspalt zwischen den Magneten des Sekundärteils 1070 und des Langstators 1050A vergrößert. Dies führt jedoch dazu, dass die von dem Langstator 1050A auf das Transportelement ausgeübte Vortriebskraft im Bereich des Kurvenstücks geringer als im Bereich des geraden Stücks ist, weswegen eine aufwändige Kompensation durch entsprechende, abschnittsweise Regelung der Stromstärke in den elektrischen Wicklungen des Langstators erforderlich ist. Dieser Effekt wird durch den vergrößerten Abstand **D** der Lagerelemente der zuvor beschriebenen Transportelemente gemäß der vorliegenden Erfindung sogar noch verstärkt.

Die vorliegende Erfindung löst dieses Problem, indem wie in Figur 9B gezeigt von der strikten Parallelführung von Langstator 1050A und Führungsschiene 1040 abgewichen wird. Der ursprünglich parallele Verlauf des Langstators 1050A ist in der Figur 9B gestrichelt gezeigt, während der erfindungsgemäße Verlauf des Langstators 1050B als durchgezogene Linie gezeigt ist. Wie aus der relativen Lage dieser Linien erkennbar ist, verläuft der Langstator 1050B zwar im Bereich des geraden Stücks der Transportbahn parallel zur Führungsschiene 1040, weicht dann aber beim Übergang in die Kurve von diesem parallelen Verlauf in Richtung Führungsschiene ab. Dabei kann diese Abweichung in Abhängigkeit von der Ausbildung des Sekundärteils 1070, dem Abstand der Rollen 1080-1 und 1080-2 und dem (lokalen) Krümmungsradius genau so gewählt werden, dass die Breite des Luftspalts zwischen Langstator 1050B und den Magneten des Sekundärteils 1070 über die gesamte Fahrstrecke konstant bleibt. Dadurch kann eine konstante Vortriebskraft auch in der Kurvenfahrt garantiert werden. Hierbei können der Verlauf des Langstators 1050A und/oder der Verlauf der Führungsschiene 1040 so abgeändert werden, dass oben genannte Effekte erzielt werden. Insbesondere kann lediglich der Verlauf der Führungsschiene 1040 entsprechend abgeändert werden. Dies ist insofern vorteilhaft, da auf diese Weise standardisierte Module von Langstatoren verwendet werden können und lediglich die einfacher zu modifizierende Führung abgewandelt werden muss.

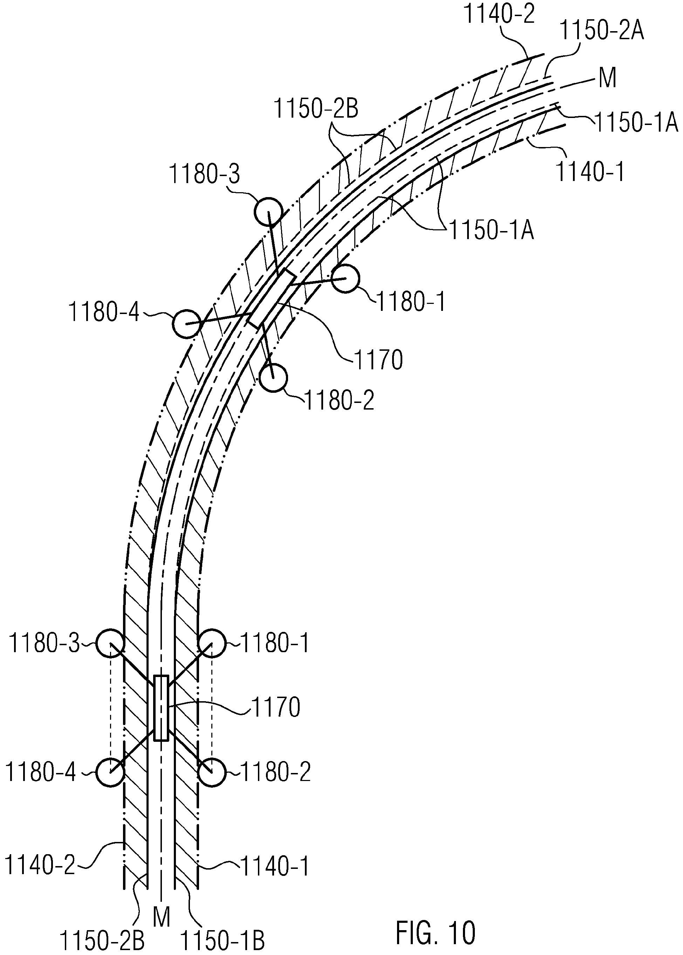

Figur 10 schließlich zeigt eine Erweiterung des Prinzips aus Figur 9B auf ein Doppelschienensystem mit beidseitigem Linearmotor. Der Einfachheit halber sind in dieser Figur Transportelemente mit symmetrischer Anordnung der Führungsrollen 1180-1 bis 1180-4 gezeigt, welche auf parallel geführten Führungsschienen 1140-1 und 1140-2 eines Doppelschienensystems abrollen. Genau mittig zwischen den Führungsrollen 1180-1 bis 1180-4 ist das Sekundärteil 1170 angeordnet, an dem wie in Figur 2 gezeigt beidseitig Magnete angeordnet sind, welche mit den Elektromagneten der Langstatoren 1150-1B und 1150-2B eines beidseitigen Linearmotors wechselwirken. Der parallele Verlauf 1150-1A und 1150-2A dieser beiden Langstatoren ist auch in Figur 10 wieder gestrichelt gezeigt. Zusätzlich ist die parallel und genau zwischen den Führungsschienen 1140-1 und 1140-2 verlaufende Mittellinie M gezeigt.

Wie bereits beschrieben verschiebt sich die Position des Sekundärteils 1170 aufgrund der Überschneidungen durch den endlichen Abstand der Führungsrollen 1180-1 und 1180-2 bzw. 1180-3 und 1180-4 bei der Kurvenfahrt in Richtung der auf der Innenkurve liegenden Führungsschiene 1140-1, während sie sich gleichzeitig von der auf der Außenkurve liegenden Führungsschiene 1140-2 weg verlagert. Um die Breiten der Luftspalte zwischen dem jeweiligen Langstator und den Magneten des Sekundärteils 1170 auch bei der Kurvenfahrt konstant zu halten, weicht daher der Kurvenverlauf des Langstators 1150-1B auf der Innenkurve in Richtung Führungsschiene 1140-1 vom parallelen Kurvenverlauf 1150-1A ab, während der Kurvenverlauf des Langstators 1150-2B auf der Außenkurve in Richtung Mittellinie M, also weg von der Führungsschiene 1140-2, vom parallelen Kurvenverlauf 1150-2A abweicht. Auch hier kann der Kurvenverlauf der Langstatoren 1150-1B und 1150-2B in Abhängigkeit von einer Ausbildung der Transportelemente und dem (lokalen) Krümmungsradius des Kurvenstücks derart vorgegeben werden, dass sich eine stets konstante Vortriebskraft bei gleichbleibender Bestromung der Langstatoren ergibt. Dadurch kann einerseits eine Ansteuerung des Linearmotors erheblich vereinfacht und andererseits ein übergroßer Verschleiß der Führungsrollen und -schienen durch wechselnde Normalkräfte vermieden werden.

Die beschriebenen Weiterbildungen erlauben eine substantielle Erhöhung des Durchsatzes an Behältern in linearen Transportsystemen und ermöglichen dadurch einen verstärkten Einsatz solcher Systeme in der Getränke verarbeitenden Industrie. Gleichzeitig können die Stabilität der Transportelemente verbessert und der Verschleiß der Lagerelemente gesenkt werden.

## Patentansprüche

1. Transportelemente (410; 510; 610N, 610V; 710N, 710V; 810N, 810V) zum Transport von Behältern (130) in einer Behälterbehandlungsanlage mit einer Transportbahn mit wenigstens einem Langstator (450; 1050B; 1150-1B; 1150-2B) eines Linearmotors,
wobei die Transportelemente bewegbar an der Transportbahn angeordnet und derart ausgebildet sind, dass sie über magnetische Wechselwirkung mit dem wenigstens einen Langstator (450; 1050B; 1150-1B, 1150-2B) entlang der Transportbahn führbar sind,
wobei die Front- und Rückseiten (410F, 410R) der Transportelemente derart geformt sind, dass die Transportelemente wenigstens paarweise (410N, 410V; 510N, 510V; 610N, 610V; 710N, 710V; 810N, 810V) soweit ineinander fahrbar sind, dass sich eine minimal erreichbare Transportteilung ergibt, die geringer als die Längsausdehnung der Transportelemente ist,
wobei die Transportelemente jeweils in Längsrichtung voneinander beabstandete Rollen (480-1 - 480-4; 580-1 - 580-4; 680-1 - 680-3; 780-1 - 780-4; 880-1 - 880-4) aufweisen, mittels derer sie bewegbar an der Transportbahn lagerbar sind,
**dadurch gekennzeichnet, dass**
die minimal erreichbare Transportteilung geringer als der maximale Abstand der Rollen in Längsrichtung ist.

2. Die Transportelemente nach Anspruch 1, wobei die Front- und Rückseiten (410F, 410R) der Transportelemente derart geformt sind, dass die Frontseite (410F) eines nachlaufenden Transportelements (410N; 510N; 610N; 710N; 810N) und die Rückseite (410R) eines vorauslaufenden Transportelements (410V; 510V; 610V; 710V; 810V) ineinander fahrbar sind.

3. Die Transportelemente nach Anspruch 2, wobei das nachlaufende Transportelement und das vorauslaufende Transportelement (410N, 410V; 510N, 510V; 610N, 610V; 710N, 710V; 810N, 810V) derart weit ineinander fahrbar sind, dass sich mindestens eine Rolle (480-2, 480-4; 580-2, 580-4; 680-2; 780-2, 780-4; 880-2, 880-4) des vorauslaufenden Transportelements (410V; 510V; 610V; 710V; 810V) in Transportrichtung (V) gesehen in einem Bereich oder hinter mindestens einer Rolle (480-1, 480-3; 580-1, 580-3; 680-1, 680-3; 780-1, 780-3; 880-1, 880-3) des nachlaufenden Transportelements (410N; 510N; 610N; 710N; 810N) befindet.

4. Die Transportelemente nach einem der Ansprüche 1 bis 3, wobei entweder die Frontseiten (410F) oder die Rückseiten (410R) eine im Wesentlichen konvexe Form besitzen und entsprechend die Rückseiten (410R) bzw. Frontseiten (410F) eine im Wesentlichen konkave Form besitzen.

5. Die Transportelemente nach einem der Ansprüche 1 bis 3, wobei die Transportelemente (610N, 610V; 710N, 710V) im Wesentlichen keil- oder winkelförmig ausgebildet sind, so dass mehrere aufeinanderfolgende Transportelemente (610N, 610V; 710N, 710V) derart um 180 Grad gedreht an der Transportbahn anordenbar sind, dass sich Front- und Rückseite vertauschen.

6. Die Transportelemente nach einem der Ansprüche 1 bis 3, wobei die Anordnung der Rollen (880-1 - 880-4) der Transportelemente (810N, 810V) inversionssymmetrisch ist.

7. Die Transportelemente nach einem der vorhergehenden Ansprüche, wobei die Transportelemente (410; 510; 610N, 610V; 710N, 710V; 810N, 810V) mittels gotischer Rollen (480-1 - 480-4; 580-1 - 580-4; 680-1 -680-3; 780-1 - 780-4; 880-1 - 880-4; 980) bewegbar an wenigstens einer Führungsschiene (440-1, 440-3; 640-1, 640-3; 740-1, 740-3; 1040; 1140-1, 1140-2) lagerbar sind.

8. Die Transportelemente nach Anspruch 7, wobei die gotischen Rollen (980) der Transportelemente (410; 510; 610N, 610V; 710N, 710V; 810N, 810V) entlang ihrer Symmetrieebene senkrecht zu ihrer Drehachse in zwei Hälften (981, 982) geteilt und derart gelagert sind, dass die beiden Hälften unabhängig voneinander rotieren können.

9. Die Transportelemente nach einem der vorhergehenden Ansprüche, wobei die Transportelemente (410; 510; 610N, 610V; 710N, 710V; 810N, 810V) jeweils eine Haltevorrichtung (120; 220) zum Halten eines oder mehrerer Behälter (130), insbesondere eine Neckhandlingklammer zum Neckhandling von Flaschen, aufweisen.

10. Die Transportelemente nach einem der vorhergehenden Ansprüche, wobei die Transportelemente (410; 510; 610N, 610V; 710N, 710V; 810N, 810V) jeweils einen Sekundärteil (470; 1070; 1170) mit wenigstens einem Permanentmagneten und/oder wenigstens einem Elektromagneten (471) aufweisen, wobei das Sekundärteil (470; 1070; 1170) derart ausgebildet ist, dass das jeweilige Transportelement durch magnetische Wechselwirkung mit dem wenigstens einen Langstator (450; 1050B; 1150-1B, 1150-2B) der Transportbahn entlang der Transportbahn bewegt werden kann.

11. Die Transportelemente nach einem der vorhergehenden Ansprüche,
wobei die Transportelemente (410; 510; 610N, 610V; 710N, 710V; 810N, 810V) mittels einer Steuer- und/oder Regeleinheit entlang der Transportbahn geführt werden können,
wobei die Steuer- und/oder Regeleinheit am Transportsystem ausgebildet ist, und/oder
wobei die Steuer- und/oder Regeleinheit jeweils am Transportelement ausgebildet ist.

12. Die Transportelemente nach Anspruch 11, wobei die Transportelemente sowohl vorwärts als auch rückwärts entlang der Transportbahn geführt werden können.

## Claims

1. Transport elements (410; 510; 610N, 610V; 710N, 710V; 810N, 810V) for transporting containers (130) in a container treatment facility having a transport track with at least one long stator (450; 1050B; 1150-1B; 1150-2B) of a linear motor,
wherein the transport elements are disposed movably on the transport track and are configured such that they can be guided along the transport track through magnetic interaction with the at least one long stator (450; 1050B; 1150-1B, 1150-2B),
wherein the front and back sides (410F, 410R) of the transport elements are shaped in such a way that the transport elements can be driven into one another at least in pairs (410N, 410V; 510N, 510V; 610N, 610V; 710N, 710V; 810N, 810V) to the extent that there will be a minimum attainable transport spacing which is smaller than the longitudinal extension of the transport elements,
wherein the transport elements each have rollers (480-1 - 480-4; 580-1 - 580-4; 680-1 - 680-3; 780-1 - 780-4; 880-1 - 880-4) which are spaced apart from one another in the longitudinal direction and by means of which they are mounted movably on the transport track,
**characterized in that**
the minimum attainable transport spacing is smaller than the maximum distance of the rollers in the longitudinal direction.

2. The transport elements according to claim 1, wherein the front and back sides (410F, 410R) of the transport elements are formed in such a way that the front side (410F) of a trailing transport element (410N; 510N; 610N; 710N; 810N) and the back side (410R) of a leading transport element (410V; 510V; 610V; 710V; 810V) can be driven into each other.

3. The transport elements according to claim 2, wherein the trailing transport element and the leading transport element (410N, 410V; 510N, 510V; 610N, 610V; 710N, 710V; 810N, 810V) can be driven into each other to such an extent that at least one roller (480-2, 480-4; 580-2, 580-4; 680-2; 780-2, 780-4; 880-2, 880-4) of the leading transport element (410V; 510V; 610V; 710V; 810V) is located in a region or behind at least one roller (480-1, 480-3; 580-1, 580-3; 680-1, 680-3; 780-1, 780-3; 880-1, 880-3) of the trailing transport element (410N; 510N; 610N; 710N; 810N) when viewed in transport direction (V).

4. The transport elements according to one of claims 1 to 3, wherein either the front sides (410F) or the back sides (410R) have an essentially convex form and correspondingly, the back sides (410R) or the front sides (410F), respectively have an essentially concave form.

5. The transport elements according to one of claims 1 to 3, wherein the transport elements (610N, 610V; 710N, 710V) are essentially formed in a wedge-shape or an angular shape, and wherein successive transport elements (610N, 610V; 710N, 710V) are disposed on the transport track in a way as to be rotated by 180 degrees such that the front and back sides are interchanged.

6. The transport elements according to one of claims 1 to 3, wherein the arrangement of the rollers (880-1 - 880-4) of the transport elements (810N, 810V) is inversion-symmetric.

7. The transport elements according to one of the preceding claims, wherein the transport elements (410; 510; 610N, 610V; 710N, 710V; 810N, 810V) are mounted movably by means of gothic rollers (480-1 - 480-4; 580-1 - 580-4; 680-1 - 680-3; 780-1 - 780-4; 880-1 - 880-4; 980) on at least one guiding rail (440-1, 440-3; 640-1, 640-3; 740-1, 740-3; 1040; 1140-1, 1140-2).

8. The transport elements according to claim 7, wherein the gothic rollers (980) of the transport elements (410; 510; 610N, 610V; 710N, 710V; 810N, 810V) are divided into two halves (981, 982) along their symmetry plane perpendicular to their rotary axis and are mounted in such a way that the two halves can rotate independently of one another.

9. The transport elements according to one of the preceding claims, wherein the transport elements (410; 510; 610N, 610V; 710N, 710V; 810N, 810V) respectively have a holding device (120; 220) for holding one or multiple containers (130), in particular a neck handling bracket for neck handling the bottles.

10. The transport elements according to one of the preceding claims, wherein the transport elements (410; 510; 610N, 610V; 710N, 710V; 810N, 810V) respectively have a secondary part (470; 1070; 1170) with at least one permanent magnet and/or at least one electromagnet (471), wherein the secondary part (470; 1070; 1170) is formed in such a way that the respective transport element can be moved along the transport track by magnetic interaction with the at least one long stator (450; 1050B; 1150-1B, 1150-2B) of the transport track.

11. The transport elements according to one of the preceding claims,
wherein the transport elements (410; 510; 610N, 610V; 710N, 710V; 810N, 810V) can be guided along the transport track by means of a control and/or regulating unit,
wherein the control and/or regulating unit is provided on the transport system, and/or
wherein the control and/or regulating unit is respectively provided on the transport element.

12. The transport elements according to claim 11, wherein the transport elements can be respectively guided forwards and backwards along the transport track.

## Revendications

1. Éléments de transport (410; 510; 610N, 610V; 710N, 710V; 810N, 810V) permettant de transporter des récipients (130) dans une installation de traitement de récipients comprenant une voie de transport avec au moins un stator longitudinal (450; 1050B; 1150-1B; 1150-2B) d'un moteur linéaire,
dans lesquels les éléments de transport sont agencés de manière déplaçable au niveau de la voie de transport et sont réalisés de telle manière qu'ils peuvent être guidés le long de la voie de transport par l'intermédiaire d'une interaction magnétique avec le au moins un stator longitudinal (450; 1050B; 1150-1B, 1150-2B), dans lesquels les côtés avant et arrière (410F, 410R) des éléments de transport sont formés de telle manière que les éléments de transport peuvent être emboîtés les uns dans les autres au moins par paires (410N, 410V; 510N, 510V; 610N, 610V; 710N, 710V; 810N, 810V) de sorte qu'un écart de transport minimal pouvant être obtenu est inférieur à l'extension longitudinale des éléments de transport,
dans lesquels les éléments de transport présentent des rouleaux (480-1 à 480-4 ; 580-1 à 580-4 ; 680-1 à 680-3 ; 780-1 à 780-4 ; 880-1 à 880-4) respectivement espacés les uns des autres dans la direction longitudinale, au moyen desquels lesdits éléments de transport sont montés de manière déplaçable au niveau de la voie de transport,
**caractérisés en ce que**
l'écart de transport minimal pouvant être obtenu est inférieur à l'espacement maximal entre les rouleaux dans la direction longitudinale.

2. Éléments de transport selon la revendication 1, dans lesquels les côtés avant et arrière (410F, 410R) des éléments de transport sont formés de telle manière que le côté avant (410F) d'un élément de transport (410N; 510N; 610N; 710N; 810N) en train de suivre et le côté arrière (410R) d'un élément de transport (410V; 510V; 610V; 710V; 810V) en train de précéder peuvent être emboîtés l'un dans l'autre.

3. Éléments de transport selon la revendication 2, dans lesquels l'élément de transport en train de suivre et l'élément de transport (410N, 410V; 510N, 510V; 610N, 610V; 710N, 710V; 810N, 810V) en train de précéder peuvent être emboîtés l'un dans l'autre de telle manière que, considéré dans la direction de transport (V), au moins un rouleau (480-2, 480-4 ; 580-2, 580-4 ; 680-2 ; 780-2, 780-4 ; 880-2, 880-4) de l'élément de transport (410V; 510V; 610V; 710V; 810V) en train de précéder se trouve à l'arrière ou dans une région située à l'arrière d'au moins un rouleau (480-1, 480-3 ; 580-1, 580-3 ; 680-1, 680-3 ; 780-1, 780-3 ; 880-1, 880-3) de l'élément de transport (410N; 510N; 610N; 710N; 810N) en train de suivre.

4. Éléments de transport selon la revendication 1 ou 3, dans lesquels les côtés avant (410F) ou les côtés arrière (410R) présentent une forme essentiellement convexe et les côtés arrière (410R) ou les côtés avant (410F) présentent de manière correspondante une forme essentiellement concave.

5. Éléments de transport selon la revendication 1 ou 3, dans lesquels les éléments de transport (610N, 610V; 710N, 710V) sont essentiellement cunéiforme ou anguleux, de sorte que plusieurs éléments de transport (610N, 610V; 710N, 710V) successifs peuvent être agencés en étant pivotés de 180 degrés sur la voie de transport de telle manière que les côtés avant et arrière s'intervertissent.

6. Éléments de transport selon l'une quelconque des revendication 1 à 3, dans lesquels l'agencement des rouleaux (880-1 à 880-4) des éléments de transport (810N, 810V) présente une symétrie d'inversion.

7. Éléments de transport selon l'une quelconque des revendications précédentes, dans lesquels les éléments de transport (410 ; 510 ; 610N, 610V; 710N, 710V; 810N, 810V) peuvent être stockés de manière déplaçable au moyen de rouleaux ogivaux (480-1 à 480-4 ; 580-1 à 580-4 ; 680-1 à 680-3 ; 780-1 à 780-4 ; 880-1 à 880-4 ; 980) au niveau d'au moins un rail de guidage (440-1, 440-3 ; 640-1, 640-3 ; 740-1, 740-3 ; 1040 ; 1140-1, 1140-2).

8. Éléments de transport selon la revendication 7, dans lesquels les rouleaux ogivaux (980) des éléments de transport (410 ; 510 ; 610N, 610V; 710N, 710V; 810N, 810V) sont divisés en deux moitiés (981, 982) le long de leur plan de symétrie perpendiculairement à leur axe de rotation et sont montés de telle manière que les deux moitiés peuvent tourner indépendamment l'une de l'autre.

9. Éléments de transport selon l'une quelconque des revendications précédentes, dans lesquels les éléments de transport (410 ; 510 ; 610N, 610V; 710N, 710V; 810N, 810V) présentent respectivement un dispositif de retenue (120 ; 220) permettant de retenir un ou plusieurs récipient(s) (130), en particulier une pince de manutention de col permettant de manipuler le col de bouteilles.

10. Éléments de transport selon l'une quelconque des revendications précédentes, dans lesquels les éléments de transport (410 ; 510 ; 610N, 610V; 710N, 710V; 810N, 810V) présentent respectivement une partie secondaire (470 ; 1070 ; 1170) avec au moins un aimant permanent et/ou au moins un électroaimant (471), dans lesquels la partie secondaire (470 ; 1070 ; 1170) est réalisée de telle manière que l'élément de transport respectif peut être déplacé le long de la voie de transport grâce à une interaction magnétique avec le au moins un stator longitudinal (450 ; 1050B; 1150-1B, 1150-2B) de la voie de transport.

11. Éléments de transport selon l'une quelconque des revendications précédentes,
dans lesquels les éléments de transport (410 ; 510 ; 610N, 610V; 710N, 710V; 810N, 810V) peuvent être guidés le long de la voie de transport au moyen d'une unité de commande et/ou de régulation,
dans lesquels l'unité de commande et/ou de régulation est réalisée au niveau du système de transport, et/ou
dans lesquels l'unité de commande et/ou de régulation est respectivement réalisée au niveau de l'élément de transport.

12. Éléments de transport selon la revendication 11, dans lesquels les éléments de transport peuvent être guidés autant vers l'avant que vers l'arrière le long de la voie de transport.
